(19) **Europäisches Patentamt**

**European Patent Office**

**Office européen des brevets**

(11) Veröffentlichungsnummer: **0 269 039 B1**

(12) ## EUROPÄISCHE PATENTSCHRIFT

(45) Veröffentlichungstag der Patentschrift: **30.12.92**

(21) Anmeldenummer: **87117198.9**

(22) Anmeldetag: **21.11.87**

(51) Int. Cl.⁵: **B23B 29/16**

(54) **Drehwerkzeug zur Aussenbearbeitung rotationssymmetrischer Werkstücke.**

(30) Priorität: **25.11.86 DE 3640202**

(43) Veröffentlichungstag der Anmeldung:
**01.06.88 Patentblatt 88/22**

(45) Bekanntmachung des Hinweises auf die
Patenterteilung:
**30.12.92 Patentblatt 92/53**

(84) Benannte Vertragsstaaten:
**AT BE CH DE ES FR GB IT LI NL SE**

(56) Entgegenhaltungen:
**DE-A- 3 429 498      DE-C- 97 913
DE-C- 275 864      GB-A- 325 256
GB-A- 346 829      GB-A- 842 167
GB-A- 2 199 527      US-A- 2 280 646
US-A- 2 453 797      US-A- 2 473 418
US-A- 3 309 951**

(73) Patentinhaber: **MAPAL Fabrik für Präzisionswerkzeuge Dr. Kress KG
Obere Bahnstrasse 13 Postfach 1520
W-7080 Aalen(DE)**

(72) Erfinder: **Die Erfinder haben auf ihre Nennung verzichtet**

(74) Vertreter: **Gleiss, Alf-Olav, Dipl.-Ing.
Patentanwalt Silberburg Strasse 187
W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Drehwerkzeug zur Bearbeitung der Außenseite rotationssymmetrischer Werkstücke gemäß Oberbegriff des Anspruchs 1.

Bei der Herstellung rotationssymmetrischer Werkstücke in Feinbearbeitungsqualität muß bei bekannten Verfahren das Werkstück zunächst auf einem Drehautomaten bearbeitet und dann einem Schleifverfahren unterworfen werden. Die Feinbearbeitung eines Werkstücks an einer Grobbearbeitungsmaschine stößt oft, insbesondere auch mangels geeigneter Werkzeuge auf Schwierigkeiten, so daß ein Werkstück dann an verschiedenen Maschinen bearbeitet werden muß, was einen erheblichen Zeitaufwand und Mehrkosten für die Bereitstellung mehrerer Maschinen bedeutet.

Aus der GB-A-346 829 ist ein Drehwerkzeug der eingangs genannten Art bekannt, das einen mit Innenausnehmung versehenen Schneidkopf aufweist. Der Schneidkopf ist mit Flanschabschnitten versehen, zwischen die Schneidstähle eingeklemmt werden.

Der Erfindung liegt daher die Aufgabe zugrunde, ein einfaches Drehwerkzeug zur Bearbeitung der Außenseite rotationssymmetrischer Werkstücke zu schaffen, mit dem ein exaktes Durchmessermaß bei genauer Rundheit und hoher Oberflächengüte erzielt werden kann.

Diese Aufgabe wird bei einem Drehwerkzeug der eingangs genannten Art mit Hilfe der in Anspruch 1 angegebenen Merkmale gelöst. Erfindungsgemäß ist vorgesehen, daß der Schneidkopf ein Hohlzylinder mit einer eingelassenen, der Führung des Werkstücks dienenden Hülse ist, daß die Seitenwand des Schneidkopfes im Bereich des Schneidelementes eine sich in Schneidkopf-Längsrichtung erstreckende, sektorförmige Aussparung aufweist, die in einer Flanke eine Nut zur Aufnahme einer das Schneidelement bildenden Messerplatte besitzt und daß die Hülse mit einer Längsaussparung versehen ist, wobei Aussparung und Längsaussparung Spanabführöffnungen bilden. Das zu bearbeitende Werkstück wird in den Hohlraum des Schneidkopfs eingeführt, wobei sich das Drehwerkzeug gegenüber dem zu bearbeitenden Werkstück oder das Werkstück gegenüber dem Drehwerkzeug dreht. Dabei wird die Außenseite des Werkstücks durch das als Messerplatte ausgebildete Schneidelement bearbeitet. Aufgrund der zumindest im Bereich des Schneidelements vorgesehenen Führung lassen sich dabei sehr exakte Maßtoleranzen und eine hervorragende Oberflächengüte erreichen. Der Schneidkopf weist im Bereich des Schneidelements eine sich in Längsrichtung des Schneidkopfs erstreckende Aussparung auf. Ferner ist die Hülse mit einer Längsaussparung versehen, so daß sich insgesamt eine sehr gute Spanabführung ergibt.

Die Hülse erstreckt sich vorzugsweise über die ganze Länge der Messerplatte.

Bei einem weiteren bevorzugten Ausführungsbeispiel sind auf der Innenseite der Führung, die im wesentlichen mit der Innenseite des Schneidkopfs fluchtet, mehrere parallel zur Mittelachse des Schneidkopfs angeordnete Führungsleisten vorgesehen. Diese Maßnahme trägt zur besseren Führung des Drehwerkzeugs und damit zur weiteren Verbesserung der Oberflächengüte bei dem zu bearbeitenden Werkstück bei.

Ein anderes bevorzugtes Ausführungsbeispiel weist konzentrisch zur Mittelachse des Schneidkopfs angeordnete Führungsringe auf der Innenseite der Führung auf, die im Bereich des Schneidelements mit Ausnehmungen versehen sind.

Ein weiteres bevorzugtes Ausführungsbeispiel ist mit untereinander verbundenen Bohrungen im Schaft und in der Seitenwand des Schneidkopfs versehen, durch die eine Kühlflüssigkeit in den Bereich des Schneidelements gepumpt werden kann. Diese Maßnahme trägt zur Verbesserung der Werkstückoberfläche aber auch zur Erhöhung der Standzeit des Werkzeugs bei.

Vorteilhafte Ausgestaltungen der Erfindung sind in den Unteransprüchen gekennzeichnet.

Die Erfindung wird im folgenden anhand der Figuren näher erläutert. Es zeigen:

Figur 1 ein erstes Ausführungsbeispiel des Drehwerkzeugs, bei dem die Führung mit mindestens einer Führungsleiste versehen ist und

Figur 2 ein zweites Ausführungsbeispiel des Drehwerkzeugs, bei der die Führung mit einem konzentrischen Führungsring versehen ist.

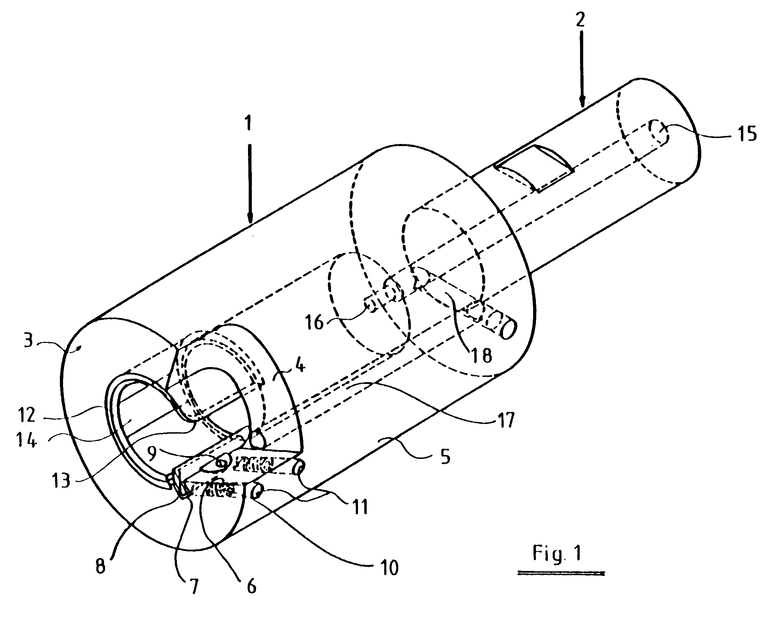

Figur 1 zeigt schematisch ein Drehwerkzeug mit einem als Hohlzylinder ausgebildeten Schneidkopf 1 und einem Schaft 2. Ausgehend von der Stirnseite 3 des Schneidkopfs 1 ist eine sektorförmige Aussparung 4 in dessen Seitenwand 5 eingebracht. In einer Flanke 6 der Aussparung 4 ist eine Nut 7 ausgespart, in die eine Messerplatte 8 eingesetzt ist, deren Schneidkante in den Innenraum des Schneidkopfs 1 ragt. Eine Spannpratze 9 ist so in die Wandung des Schneidkopfs 1 eingesetzt, daß sie die Messerplatte 8 an die in Drehrichtung rückwärtige Flanke der Nut 7 mittels einer Spannschraube preßt. Dabei liegt die Spannpratze 9 an der Brust der Messerplatte 8 an. Zur exakten radialen Einstellung der Messerplatte 8 dienen in Figur 1 nicht dargestellte, an ihrem vorderen Ende keilförmig ausgebildete Stellkörper, deren Lage mittels als Stellorgan dienende Madenschrauben bzw. Schraubenbolzen 10 eingestellt und fixiert wird. Die Schraubenbolzen sind in Innengewinde aufweisende Einstell-Bohrungen 11 des Schneidkopfs 1 eingeschraubt.

Im vorderen Teil des Schneidkopfs 1 ist an dessen Innenwand eine sich mindestens über die Länge der Messerplatte 8 erstreckende aus verschleißfestem Werkstoff, zum Beispiel aus Hartmetall bestehende Führung vorgesehen, die als Hülsen 12 ausgebildet ist. Sie dient der Führung des zu bearbeitenden Werkstücks und ist so mit der Seitenwand 5 des Schneidkopfs 1 verbunden, daß sie sich innerhalb des Schneidkopfs nicht verdrehen kann. Um den Abfluß der Späne zu ermöglichen, ist eine Längsaussparung 13 in der Hülse 12 vorgesehen. Der Öffnungswinkel der Längsaussparung ist kleiner als der der Aussparung 4 in der Seitenwand 5 des Schneidkopfs 1. Die Innenwand der Hülse 12, die einen vorgegebenen Innenradius aufweist, kann eine glatte zylindrische Oberfläche oder auch, wie in Figur 1 dargestellt, mindestens eine als Führungsleiste 14 dienende Längserhebung aufweisen. Vorzugsweise werden zwei Führungsleisten vorgesehen, von denen eine der Messerplatte 8 in Drehrichtung des Werkzeugs um 40° nachgeordnet ist, während die andere gegenüber der Messerplatte 8 liegt.

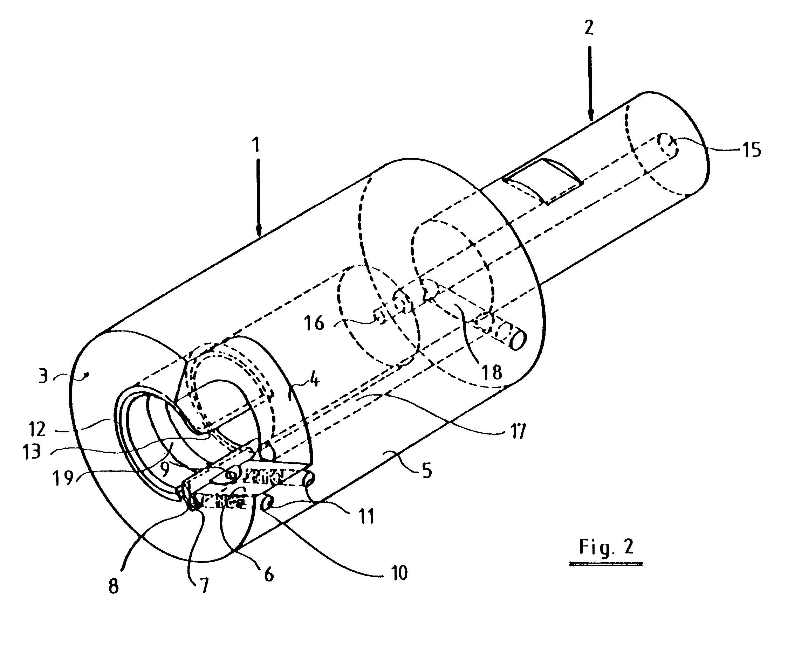

Die Innenwand der Führung kann ebenso wie die des übrigen Schneidkopfs 1, auch konisch ausgebildet sein. Die Schneidkante der Messerplatte 8 wird dann so ausgerichtet, daß sie parallel zur Innenwand verläuft, und in den Hohlraum des Schneidkopfs 1 ragt, wie dies auch bei den Ausführungsbeispielen gemäß den Figuren 1 und 2 der Fall ist.

Bei dem in Figur 1 dargestellten Ausführungsbeispiel weist der zylindrische Schaft 2 eine axiale, erste Bohrung 15 für die Kühlmittelzufuhr auf, die bis an den Hohlraum des Schneidkopfs 1 herangeführt ist. Ein Mündungskanal 16, dessen Durchmesser kleiner ist als der der ersten Bohrung 15, verbindet den Hohlraum mit der ersten Bohrung 15. Um das Kühlmittel unmittelbar der Messerplatte 8 zuzuführen, ist in der Wandung 5 des Schneidkopfs 1 eine vorzugsweise im wesentlichen parallel zur Mittelachse des Drehwerkzeugs verlaufende, zweite Bohrung 17 vorgesehen, die über eine radiale Bohrung 18 mit der ersten Bohrung 15 in Verbindung steht.

Figur 2 zeigt ein zweites Ausführungsbeispiel eines Drehwerkzeugs, bei dem gleiche Teile mit gleichem Bezugszeichen versehen sind. Auf deren Beschreibung wird verzichtet.

Aus Figur 2 ist ersichtlich, daß die Innenseite der ebenfalls als Hülse 12 ausgebildeten Führung einen konzentrisch zur Mittelachse des Drehwerkzeugs verlaufenden Führungsring 19 aufweist, der der Führung des zu bearbeitenden Werkstücks dient. Statt eines Führungsrings können auch mehrere vorgesehen werden. Auch bei diesem Ausführungsbeispiel ist es möglich, die Innenwand der Hülse 12 konisch auszubilden.

Der Innenradius der Führung ist in dem Bereich, der in Drehrichtung des Werkzeugs der Schneidvorrichtung 8 nachgeordnet ist, größer als in den übrigen Bereichen. Dadurch werden die Kühlmittelzufuhr sowie die Spanabführung verbessert. Der Bereich mit größerem Innendurchmesser erstreckt sich beispielsweise über einen Sektor von 30°.

Zur Bearbeitung langer Werkstücke kann auch der Schaft 2 des Drehwerkzeugs als Hohlkörper ausgebildet werden. Der Außendurchmesser des Schafts muß dann gegenüber den Figuren 1 und 2 dargestellten Ausführungsbeispielen entsprechend vergrößert werden.

**Patentansprüche**

1. Drehwerkzeug zur Bearbeitung der Außenseite rotationssymmetrischer Werkstücke, mit einem mit Innenausnehmung versehenen Schneidkopf (1), an dessen Seitenwand mindestens ein Schneidelement (8) angeordnet ist, dadurch gekennzeichnet, daß der Schneidkopf (1) ein Hohlzylinder mit einer eingelassenen, der Führung des Werkstücks dienenden Hülse (12) ist, daß die Seitenwand (5) des Schneidkopfs (1) im Bereich des Schneidelements (8) eine sich in Schneidkopf-Längsrichtung erstreckende, sektorförmige Aussparung (4) aufweist, die in einer Flanke (6) eine Nut (7) zur Aufnahme einer das Schneidelement bildenden Messerplatte (8) besitzt und daß die Hülse (12) mit einer Längsaussparung (13) versehen ist, wobei Aussparung (4) und Längsaussparung (13) Spanabfuhröffnungen bilden.

2. Drehwerkzeug nach Anspruch 1, dadurch gekennzeichnet, daß die Hülse (12) sich über die ganze Länge der Messerplatte (8) erstreckt.

3. Drehwerkzeug nach einem der vorhergehenden Ansprüche, dadurch gekennzeichnet, daß die Hülse (12) auf ihrer Innenseite mindestens eine parallel zur Mittelachse des Schneidkopfs (1) angeordnete Führungsleiste (14) aufweist.

4. Drehwerkzeug nach einem der vorhergehenden Ansprüche, dadurch gekennzeichnet, daß die Hülse (12) auf ihrer Innenseite konzentrisch zur Mittelachse des Schneidkopfes (1) angeordnete Führungsringe (19) aufweist, die im Bereich der Schneide mit Ausnehmungen versehen sind.

5. Drehwerkzeug nach einem der vorhergehenden Ansprüche, dadurch gekennzeichnet, daß die Aussparung (4) sich in Längsrichtung des Schneidkopfes (1) wenigstens über die Länge der Messerplatte (8) erstreckt.

**6.** Drehwerkzeug nach einem der vorhergehenden Ansprüche, dadurch gekennzeichnet, daß der Innenradius der Hülse (12) in dem Bereich, der in Drehrichtung des Werkzeugs der Schneide nachgeordnet ist, einen größeren Innenradius aufweist als im übrigen Bereich.

**7.** Drehwerkzeug nach einem der vorhergehenden Ansprüche, dadurch gekennzeichnet, daß das Schneidelement über die Stirnfläche (3) des Schneidkopfes (1) vorspringt.

**8.** Drehwerkzeug nach einem der vorhergehenden Ansprüche, dadurch gekennzeichnet, daß die Nut (7) sich bis zur Stirnseite (3) des Schneidkopfes (1) erstreckt.

**9.** Drehwerkzeug nach einem der vorhergehenden Ansprüche, dadurch gekennzeichnet, daß in der Wandung des Schneidkopfes (1) sich bis zur Nut (7) erstreckende Einstell-Bohrungen (11) vorgesehen sind, die zur Aufnahme eines der radialen Einstellung des Schneidelements dienenden Organs (10) ein Innengewinde aufweisen.

**10.** Drehwerkzeug nach einem der vorhergehenden Ansprüche, dadurch gekennzeichnet, daß der Schaft (2) des Schneidkopfs (1) eine axiale erste Bohrung (15) für die Kühlmittelzufuhr aufweist.

**11.** Drehwerkzeug nach einem der vorhergehenden Ansprüche, dadurch gekennzeichnet, daß die Seitenwand (10) des Schneidkopfs (1) eine mit der ersten Bohrung (15) in Verbindung stehende, sich bis zur Messerplatte (8) erstreckende zweite Bohrung (17) aufweist.

**12.** Drehwerkzeug nach einem der vorhergehenden Ansprüche, dadurch gekennzeichnet, daß die im Mantel (10) des Schneidkopfs (1) sich bis zur Messerplatte (8) erstreckende zweite Bohrung (17) einen größeren Durchmesser aufweist, als der in den Hohlraum des Schneidkopfs (1) mündende Mündungskanal (16) der ersten Bohrung (15).

**13.** Drehwerkzeug nach einem der vorhergehenden Ansprüche, dadurch gekennzeichnet, daß der Schaft (2) eine zur Längsachse des Drehwerkzeugs konzentrische Bohrung aufweist, deren Innendurchmesser dem des Hohlraums des Schneidkopfs (1) entspricht.

**14.** Drehwerkzeug nach einem der vorhergehenden Ansprüche, dadurch gekennzeichnet, daß die Hülse (12) aus einem verschleißfesten Hartstoff besteht.

**15.** Drehwerkzeug nach einem der vorhergehenden Ansprüche, dadurch gekennzeichnet, daß die Messerplatte(8) von einer Spannpratze (9) festgeklemmt ist.

**Claims**

**1.** Rotary tool for machining the outside of workpieces of rotational symmetry, having a cutter head (1) which is provided with an internal hollow and on the side wall of which at least one cutting element (8) is arranged, characterized in that the cutter head (1) is a hollow cylinder having, disposed therein, a sleeve (12) which serves to guide the workpiece, in that the side wall (5) of the cutter head (1) has in the region of the cutting element (8) a sector-shaped cutout (4) which extends in the longitudinal direction of the cutter head and which has in one flank (6) a groove (7) for receiving a blade plate (8) which forms the cutting element, and in that the sleeve (12) is provided with a longitudinal cutout (13), cutout (4) and longitudinal cutout (13) forming chip-removal openings.

**2.** Rotary tool according to Claim 1, characterized in that the sleeve (12) extends over the entire length of the blade plate (8).

**3.** Rotary tool according to one of the preceding claims, characterized in that the sleeve (12) has on its inside at least one guiderail (14) arranged parallel to the centre axis of the cutter head (1).

**4.** Rotary tool according to one of the preceding claims, characterized in that the sleeve (12) has on its inside guide rings (19) which are arranged concentrically with respect to the centre axis of the cutter head (1) and which are provided with hollows in the region of the cutting edge.

**5.** Rotary tool according to one of the preceding claims, characterized in that the cutout (4) extends in the longitudinal direction of the cutter head (1) at least over the length of the blade plate (8).

**6.** Rotary tool according to one of the preceding claims, characterized in that the internal radius of the sleeve (12) in the region which, as seen in the direction of rotation of the tool, is arranged after the cutter has a larger internal radius than in any other region.

7. Rotary tool according to one of the preceding claims, characterized in that the cutting element projects beyond the end face (3) of the cutter head (1).

8. Rotary tool according to one of the preceding claims, characterized in that the groove (7) extends as far as the end side (3) of the cutter head (1).

9. Rotary tool according to one of the preceding claims, characterized in that there are provided in the wall of the cutter head (1) adjustment bores (11) which extend as far as the groove (7) and which have an internal thread for receiving a member (10) which serves for the radial adjustment of the cutting element.

10. Rotary tool according to one of the preceding claims, characterized in that the shaft (2) of the cutter head (1) has an axial first bore (15) for the coolant supply.

11. Rotary tool according to one of the preceding claims, characterized in that the side wall (10) of the cutter head (1) has a second bore (17) which is connected to the first bore (15) and which extends as far as the blade plate (8).

12. Rotary tool according to one of the preceding claims, characterized in that the second bore (17) which extends in the outer casing (10) of the cutter head (1) as far as the blade plate (8) has a larger diameter than the opening channel (16) of the first bore (15) which opens into the cavity of the cutter head (1).

13. Rotary tool according to one of the preceding claims, characterized in that the shaft (2) has a bore which is concentric with respect to the longitudinal axis of the rotary tool and whereof the internal diameter corresponds to that of the cavity of the cutter head (1).

14. Rotary tool according to one of the preceding claims, characterized in that the sleeve (12) is of an abrasion-resistant hard material.

15. Rotary tool according to one of the preceding claims, characterized in that the blade plate (8) is securely clamped by a clamping claw (9).

**Revendications**

1. Outil de tournage pour l'usinage de la face extérieure de pièce symétriques de révolution, avec une tête de coupe (1) pourvue d'un évidement interne, sur la paroi latérale de laquelle est disposé au moins un élément de coupe (8), outil de tournage caractérisé en ce que la tête de coupe (1) est un cylindre creux avec une douille (12) insérée, servant au guidage de la pièce à usiner, en ce que la paroi latérale (5) de la tête de coupe (1) présente dans la zone de l'élément de coupe (8) un évidement (4) en forme de secteur, s'étendant dans le sens longitudinal de la tête de coupe, évidement (4) qui possède dans un flanc (6) une rainure (7) pour recevoir une plaquette de fraisage constituant l'élément de coupe et en ce que la douille (12) est pourvue d'un évidement longitudinal (13), l'évidement (4) et l'évidement longitudinal (13) formant des ouvertures d'évacuation de copeaux.

2. Outil de tournage selon la revendication 1, caractérisé en ce que la douille (12) s'étend sur toute la longueur de la plaquette de fraisage (8).

3. Outil de tournage selon l'une des revendications précédentes, caractérisé en ce que la douille (12) présente sur sa face interne au moins un barreau (14) de guidage disposé parallèlement à l'axe médian de la tête de coupe (1).

4. Outil de tournage selon l'une des revendications précédentes, caractérisé en ce que la douille (12) présente sur sa face intérieure des bagues de guidage (19) disposées concentriquement à l'axe médian de la tête de coupe (1), bagues qui sont pourvues d'évidements dans la zone des tranchants.

5. Outil de tournage selon l'une des revendications précédentes, caractérisé en ce que l'évidement (4) s'étend dans le sens longitudinal de la tête de coupe (1) au moins sur la longueur de la plaquette de fraisage (8).

6. Outil de tournage selon l'une des revendications précédentes, caractérisé en ce que le rayon interne de la douille (12) présente, dans la zone qui est disposée après le tranchant dans le sens de rotation de l'outil, un rayon intérieur plus grand que dans la zone restante.

7. Outil de tournage selon l'une des revendications précédentes, caractérisé en ce que l'élément de coupe fait saillie sur la face frontale (3) de la tête de coupe (1).

8. Outil de tournage selon l'une des revendications précédentes, caractérisé en ce que la rainure (7) s'étend jusqu'à la face frontale (3) de la tête de coupe (1).

9. Outil de tournage selon l'une des revendications précédentes, caractérisé en ce que dans la paroi de la tête de coupe (1) sont prévus des trous de réglage (11) s'étendant jusqu'à la rainure (7), trous qui présentent un filetage interne pour recevoir un organe (10) servant au réglage radial de l'élément de coupe.

10. Outil de tournage selon l'une des revendications précédentes, caractérisé en ce que la broche (2) de la tête de coupe (1) présente un premier alésage axial (15) pour l'amenée de l'agent de refroidissement.

11. Outil de tournage selon l'une des revendications précédentes, caractérisé en ce que la paroi interne (10) de la tête de coupe (1) présente un deuxième alésage (17) qui est en liaison avec le premier alésage (15) et s'étend jusqu'à la plaquette de fraisage (8).

12. Outil de tournage selon l'une des revendications précédentes, caractérisé en ce que le deuxième alésage (17), s'étendant dans l'enveloppe (10) de la tête de coupe (1) jusqu'à la plaquette de fraisage (8), présente un diamètre plus grand que le canal (16) du premier alésage (15) qui débouche dans l'espace creux de la tête de coupe (1).

13. Outil de coupe selon l'une des revendications précédentes, caractérisé en ce que la broche (2) présente un alésage concentrique à l'axe longitudinal de l'outil de tournage, alésage dont le diamètre interne correspond à celui de l'espace creux de la tête de coupe (1).

14. Outil de tournage selon l'une des revendications précédentes, caractérisé en ce que la douille (12) est réalisée en une matière dure résistant à l'usure.

15. Outil de tournage selon l'une des revendications précédentes, caractérisé en ce que la plaquette de fraisage (8) est bloquée solidement par une griffe de serrage (9).

Fig. 1

Fig. 2

EP 0 269 039 B1